# EUROPÄISCHE PATENTSCHRIFT

(11) **EP 2 817 080 B1**
(45) Veröffentlichungstag und Bekanntmachung des Hinweises auf die Patenterteilung: **21.10.2020**
(21) Anmeldenummer: 13704069.7
(22) Anmeldetag: 08.02.2013
(51) Int. Cl.: B01D 53/04, B01D 53/14

(54) **FILTERGRANULAT**
FILTER GRANULES
GRANULAT FILTRANT

(30) Priorität: 20.02.2012 DE 102012202563
(43) Veröffentlichungstag der Anmeldung: 31.12.2014
(73) Patentinhaber: Lufthansa Technik AG, 22335 Hamburg (DE)
(72) Erfinder: PAUL, Manfred, 55299 Nackenheim (DE); SWEREDJUK, Robert, 87463 Dietmannsried - Reicholzried (DE); POMMERSHEIM, Rainer, 55116 Mainz (DE)
(74) Vertreter: Glawe, Delfs, Moll
(86) Internationale Anmeldenummer: PCT/EP2013/052495
(87) Internationale Veröffentlichungsnummer: WO 2013/124168

(56) Entgegenhaltungen:
- EP-A2- 0 393 723
- WO-A1-2013/023715
- WO-A2-02/102505
- US-A1- 2005 053 515
- US-A1- 2007 119 302
- US-A1- 2010 140 175

## Beschreibung

Die Erfindung betrifft ein Filtergranulat zum Binden von Bestandteilen eines Gasstroms. Gegenstand der Erfindung ist ferner die Verwendung eines solchen Filtergranulats zur Filterung der Atemluft in Verkehrsmitteln, insbesondere Flugzeugen sowie ein mit einem Filter mit erfindungsgemäßem Filtergranulat ausgerüstetes Flugzeug.

Viele Verkehrsmittel, insbesondere Flugzeuge und beispielsweise Hochgeschwindigkeitszüge, werden in der Regel druckdicht gebaut und künstlich belüftet. Flugzeuge weisen eine Druckkabine auf, in der in Reiseflughöhe ein über dem Außenluftdruck liegender Kabinendruck eingestellt wird.

Die Luftversorgung einer Druckkabine erfolgt in der Regel sowohl durch Umwälzen und Reinigen von Kabinenluft als auch durch Zumischen von außen zugeführter Frischluft. Da der Außendruck in Reiseflughöhe unter dem Kabinendruck liegt, muss die zuzuführende Frischluft verdichtet werden. In der Regel wird für die Frischluftzufuhr ein Teil des Luftstroms aus dem Verdichter eines oder mehrerer Flugzeugtriebwerke (sogenannte Zapfluft) abgezweigt, auf ein gewünschtes Temperaturniveau gekühlt und der Kabinenluft beigemischt.

Die Zapfluft von Strahltriebwerken kann mit Ölrückständen oder Ölnebeln verunreinigt sein, insbesondere dann, wenn beispielsweise Schmieröl des Triebwerks im Bereich der Welle oder dergleichen austritt und von dem Verdichterluftstrom mitgerissen wird. Die Öle von Strahltriebwerken können für den Menschen schädliche Bestandteile oder Additive wie beispielsweise Trikresylphosphat (TCP) enthalten. Mitgerissene Ölrückstände können ferner zu einem unangenehmen Ölgeruch in der Flugzeugkabine führen. Umgewälzte Kabinenluft kann ebenfalls Geruchs- oder Schadstoffe enthalten.

Im Stand der Technik ist es daher bereits bekannt, Filtersysteme für die Zapfluft von Triebwerken und/oder umgewälzte Kabinenluft vorzusehen. Zum einen sind aus offenkundiger Vorbenutzung beispielsweise Aktivkohlefilter bekannt. Diese besitzen nur ein relativ geringes Aufnahmevermögen und binden Schadstoffe durch Physisorption reversibel, sodass diese bei höherer Belastung eines Aktivkohlefilters auch wieder freigesetzt werden können.

Bekannt ist ferner, unerwünschte Bestandteile aus der Kabinenluft durch katalytische Oxidation zu entfernen (beispielsweise US 2003/0188850 A1, US 2009/0227195 A1, US 2010/0158775 A1 und US 2005/0053515 A1). Solche katalytischen Systeme sind sehr aufwändig in der Installation und im Betrieb, da ständig Betriebsbedingungen gewahrt sein müssen, die eine katalytische Oxidation der Schadstoffe ermöglichen, beispielsweise Temperaturen von über 200° C für eine thermische Katalyse oder Zufuhr von UV-Strahlung für eine Photokatalyse.

Der Erfindung liegt die Aufgabe zugrunde, eine einfach zu handhabende und wirksame Möglichkeit zur Entfernung von Schadstoffen wie beispielsweise Ölrückständen aus einem Gasstrom, insbesondere der Zapfluft oder Kabinenluft von Flugzeugen, zur Verfügung zu stellen.

Gelöst wird diese Aufgabe durch ein Filtergranulat zum Binden von Bestandteilen eines Gasstroms, mit Filterpartikeln, die folgende Komponenten aufweisen:
a) eine Komponente zur Physisorption von Bestandteilen, ausgewählt aus der Gruppe bestehend aus Aktivkohle, Bentonit, Kieselerden und Zeolithen,
b) eine Komponente zur Chemisorption von Bestandteilen, ausgewählt aus der Gruppe bestehend aus Peptiden oder Proteinen,
c) eine Komponente zur Lösung von Ölbestandteilen, die ionische Flüssigkeiten enthält, wobei die ionischen Flüssigkeiten vorzugsweise Kationen ausgewählt aus der Gruppe bestehend aus alkylierten Imidazolium-, Pyridinium-, Pyrrolidinium-, Guanidinium-, Uronium-, Thiouronium-, Piperidinium-, Morpholinium-, Ammonium- und Phosphoniumionen und Anionen ausgewählt aus der Gruppe bestehend aus Tetrafluoroboraten, Trifluoracetaten, Triflaten, Hexafluorophosphaten, Phosphinaten, Tosylaten, Imiden, Amiden, Sulfaten und Halogeniden enthalten.

Gegenstand der Erfindung sind ferner ein Filtervlies mit einem erfindungsgemäßen Granulat, die Verwendung eines solchen Granulats oder Vlieses zur Filterung der Atemluft in Verkehrsmitteln, insbesondere Flugzeugen; sowie Flugzeuge, die mit Filtern mit erfindungsgemäßem Granulat oder Vlies ausgerüstet sind.

Zunächst seien einige im Rahmen der Erfindung verwendete Begriffe erläutert.

Der Begriff Granulat bezeichnet einen körnigen schüttbaren Feststoff. Ein Filtergranulat besitzt die Eignung zur Verwendung in einem Filter für einen Gasstrom, wie unten näher beschrieben. Die Einzelbestandteile des Filtergranulats sind Filterpartikel.

Erfindungsgemäß sind in dem Filtergranulat Filterpartikel enthalten, die drei Komponenten gleichzeitig aufweisen. Der Begriff Komponente ist in diesem Kontext funktional zu verstehen und bedeutet Teile oder Bestandteile eines Partikels, die die beschriebene Funktion ausüben können.

Eine erste Komponente dient zur Physisorption von Bestandteilen des Gasstroms. Bei der Physisorption wird ein absorbiertes Molekül durch in der Regel vergleichsweise schwache physikalische Kräfte (Bindungsenergien häufig im Bereich 4-40 kJ/mol) an der Oberfläche der Komponente (des physisorbierenden Substrats) gebunden. Die Physisorption führt in der Regel zu keiner chemischen Veränderung der absorbierten Stoffe und ist üblicherweise reversibel.

Eine weitere Komponente dient zur Chemisorption von Bestandteilen des Gasstroms. Bei der Chemisorption wird das Absorbat (der gebundene Bestandteil des Gasstroms) und/oder das Absorbens (die Komponente, die das Substrat für die Chemisorption bildet) chemisch verändert. Bindungsenergien können beispielsweise im Bereich um 800 kJ/mol liegen. Die Chemisorption ist in der Regel irreversibel, d.h. die chemisorbierten Bestandteile sind dauerhaft gebunden.
Erfindungsgemäß dient eine dritte Komponente zur Lösung von Ölbestandteilen. Der Begriff Ölbestandteile bezeichnet im Gasstrom mitgeführte Bestandteile beispielsweise vom Schmieröl eines Strahltriebwerks, in der Regel liegen solche Ölbestandteile als Aerosol fein verteilt in dem Gasstrom vor. Die genannte Komponente enthält ein Lösemittel, das Ölbestandteile in Lösung überführen und damit aus dem Gasstrom entfernen kann. Der Dampfdruck des Lösemittels und der daraus hervor gehenden Lösung der Ölbestandteile ist erfindungsgemäß bevorzugt so gering, dass unter den Betriebsbedingungen des entsprechenden Filters Lösemittel und/oder Lösung nicht in nennenswertem Maße in den Gasstrom eingetragen werden. Als Lösemittel sind die unten näher beschriebenen ionischen Flüssigkeiten vorgesehen.

Das erfindungsgemäße Filtergranulat vereint somit drei Komponenten und damit auch drei Funktionen. Die Komponente zur Physisorption ist erfindungsgemäß ausgewählt aus der Gruppe bestehend aus Aktivkohle, Kieselerden, Zeolithen und Bentonit und bewirkt eine schnelle und wirksame Abreicherung von der Physisorption zugänglichen Bestandteilen des Gasstroms wie beispielsweise Luftschadstoffen, Gerüchen oder dergleichen.

Die chemisorbierende Komponente erlaubt eine dauerhafte und damit irreversible Bindung entsprechender unerwünschter Bestandteile des Gasstroms. Es ist im Rahmen der Erfindung auch möglich, dass Bestandteile des Gasstroms zunächst physisorbiert und damit im Bereich des Filtergranulats lokalisiert werden und anschließend eine Chemisorption und damit dauerhafte Bindung erfolgt.

Die Komponente zur Lösung von Ölbestandteilen erlaubt eine dauerhafte und sichere Entfernung entsprechender Ölaerosole aus einem Gasstrom, damit wird wirkungsvoll dem Eintrag unerwünschter Ölgerüche sowie Schadstoffe aus Schmieröl in die Kabinenluft von den Flugzeugen vorgebeugt. Die Entfernung dieser Ölbestandteile durch Lösen in einem Lösungsmittel bindet die Ölbestandteile dauerhaft und besitzt zudem eine hohe Aufnahmekapazität.

Das erfindungsgemäße Filtergranulat erlaubt somit eine sichere und schnelle, aber auch dauerhafte und irreversible Entfernung typischer Geruchs- und Schadstoffbestandteile aus einem Gasstrom, insbesondere der Atemluft einer Flugzeugkabine.

Die Komponente zur Chemisorption kann erfindungsgemäß geeignete Aminosäuren oder Aminosäuresequenzen, nämlich Peptide oder Proteine enthalten. Peptide sind in der Regel kurzkettiger als Proteine, zwischen den beiden Begriffskategorien gibt es einen fließenden Übergang. Solche Peptide oder Proteine können durch Chemisorption Schadstoffe binden, die sogenannte proteinreaktive Substanzen sind, also Verbindungen, die mit Proteinen oder Proteinderivaten der Komponente zur Chemisorption reagieren und eine chemische Bindung eingehen. Darunter fallen typische Luftschadstoffe wie Aldehyde (insbesondere Formaldehyd) und viele flüchtige organische Verbindungen (volatile organic components VOC). Geeignete Aminosäurensequenzen lassen sich beispielsweise durch Hydrolyse von Eiweißen wie beispielsweise Skleroproteinen herstellen, ferner kann man beispielsweise keratinhaltige Fasern wie beispielsweise Schafwollfasern verwenden.

Erfindungsgemäß enthält die Komponente zur Lösung von Ölbestandteilen ionische Flüssigkeiten. Ionische Flüssigkeiten sind Salze, die bei den Betriebstemperaturen des Filters in der Regel flüssig sind. Typischerweise sind ionische Flüssigkeiten bei Temperaturen unter 100° C flüssig, bevorzugt auch bei Raumtemperatur. Ionische Flüssigkeiten besitzen einen sehr niedrigen, kaum messbaren Dampfdruck und verfügen über gute Lösungseigenschaften für Ölbestandteile.

Bevorzugt sind in erfindungsgemäßen ionischen Flüssigkeiten die Kationen ausgewählt aus der Gruppe bestehend aus ggf. alkylierten Imidazolium-, Pyridinium-, Pyrrolidinium-, Guanidinium-, Uronium-, Thiouronium-, Piperidinium-, Morpholinium-, Ammonium- und Phosphoniumionen und die Anionen aus-gewählt aus der Gruppe bestehend aus Tetrafluoroboraten, Trifluoracetaten, Triflaten, Hexafluorophosphaten, Phosphinaten, Tosylaten, Imiden, Amiden, Sulfaten und Halogeniden. Bei einer vorteilhaften Ausführungsform der Erfindung weisen die Partikel des Filtergranulats eine Matrix auf. Der Begriff Matrix bezeichnet eine Substanz, die als Strukturbildner der Partikel dient und die beschriebenen Komponenten trägt. Bestandteile der Matrix können Komponenten zur Physisorption und/oder Chemisorption umfassen. Die Matrix kann ferner Bindemittel enthalten, beispielsweise Bindemittel ausgewählt aus der Gruppe bestehend aus Mannuron-, Guluron-, Alginat- und Pektinsalzen. Diese Bindemittel können beispielsweise als Alkalisalze zunächst in wässriger Lösung zur Verfügung gestellt und mit weiteren Komponenten vermischt werden. Durch Austausch der Alkalionen gegen beispielsweise Erdalkalionen kann man aus den löslichen Salzen unlösliche Salze machen, die damit ausfallen oder gelieren und so entsprechende Partikel herstellen. Beispielsweise kann man Tropfen der wässrigen Lösung in eine wässrige oder alkalische Kalziumchloridlösung einbringen und auf diese Weise schnell die Herstellung unlöslicher Erdalkalisalze bewirken.

Eine solche Matrix mit den genannten Bindemitteln kann auch ionische Flüssigkeiten einschließen bzw. einkapseln. Die Verkapselung von Ölen in einer Matrix aus einem Alkalimetallalginat ist bspw. beschrieben in US 4,389,419.

Der mittlere Partikeldurchmesser der Partikel eines erfindungsgemäßen Filtergranulats kann bevorzugt zwischen 100 µm und 5 mm liegen. Bevorzugte Größenbereiche sind 200 µm bis 3 mm, weiter vorzugsweise 500 µm bis 2 mm.

Gegenstand der Erfindung ist ferner ein Filtervlies, das mit erfindungsgemäßem Filtergranulat ausgerüstet ist.

Ein weiterer Gegenstand der Erfindung ist die Verwendung eines erfindungsgemäßen Filtergranulats und/oder Filtervlieses zur Filterung der Atemluft in Verkehrsmitteln, insbesondere Flugzeugen. Erfindungsgemäß kann die Filterung von Zapfluft erfolgen, bevor diese erstmalig dem Klimatisierungssystem der Kabine zugeleitet wird, um Ölrückstände oder andere aus dem Verdichtertrakt des Triebwerks stammende Schadstoffe zu entfernen. Alternativ oder zusätzlich kann umgewälzte Kabinenluft gefiltert werden, um auch sonstige Luftschadstoffe, Gerüche oder dergleichen zu entfernen.

Ein weiterer Gegenstand der Erfindung ist ein Filter zur Filterung der Atemluft in Verkehrsmitteln, insbesondere Flugzeugen, der ein erfindungsgemäßes Filtergranulat und/oder ein Filtervlies aufweist. Filtergranulat und Filtervlies können in einer sandwichartigen Anordnung vorliegen.

Gegenstand der Erfindung ist ferner ein Flugzeug, das wenigstens einen Filter mit erfindungsgemäßem Filtergranulat und/oder Filtervlies enthält. Die Filter können zur Reinigung von Zapfluft oder umgewälzter Kabinenluft verwendet werden und an einem oder mehreren der folgenden Einbauorte angeordnet sein:
- zwischen Zapfluftventil und Kühleinheit,
- zwischen Kühl- und Mischeinheit,
- zwischen Mischeinheit und Austritt der Versorgungsrohre in Kabine und/oder Cockpit.

Die verwendeten Begriffe werden nachfolgend im Zusammenhang mit dem Ausführungsbeispiel erläutert. Bevorzugt ist die Anordnung innerhalb der Druckkabine vor dem Austritt der Versorgungsrohre in Kabine und/oder Cockpit.

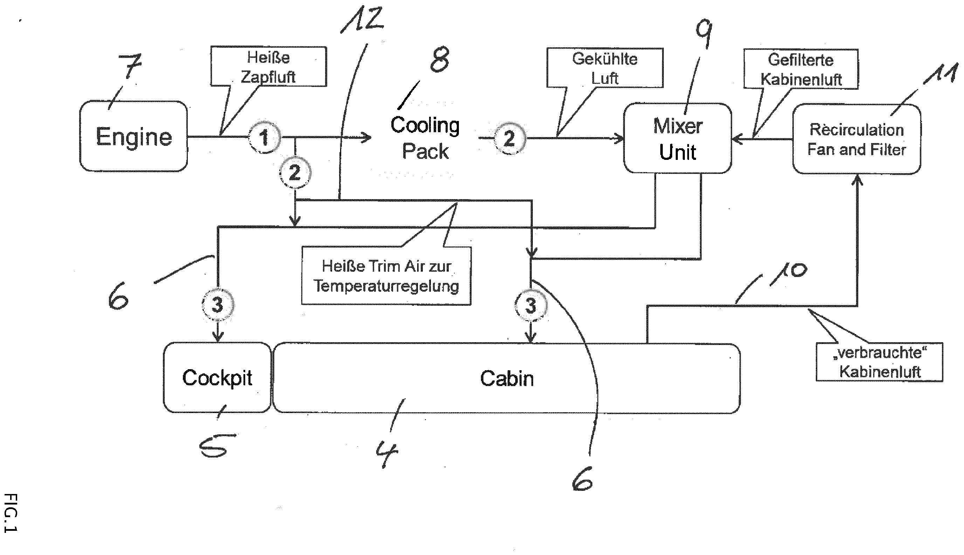

Ausführungsbeispiele der Erfindung werden nachfolgend beschrieben. Die einzige Figur zeigt schematisch das Klimasystem eines Verkehrsflugzeugs.

Die Herstellung eines erfindungsgemäßen Granulats wird nachfolgend beschrieben.

In 900 ml Wasser werden folgende Bestandteile gelöst bzw. dispergiert:
- 90 g Bentonit
- 45 g Aktivkohle
- 35 g Ethyl-Methylimidazolium-Ethylsulfat
- 5 g N-(L-α-Aspartyl)-L-phenylalanin-methylester
- 6 g Natriumalginat.

Die so hergestellte Lösung bzw. Dispersion wird mittels einer geeigneten Düsenvorrichtung tropfenweise in eine zweiprozentige wässrige Kalziumchloridlösung eingebracht. Durch den Zutritt von Kalzium (oder anderen geeigneten mehrwertigen Metallkationen) entstehen unlösliche Alginatsalze, die die eingedüsten Tropfen zum Gelieren und zum Erstarren bringen. Die erstarrten Partikel werden mit Wasser gewaschen und im Luftstrom getrocknet.

Die mittlere Teilchengröße des so hergestellten Granulats liegt je nach Einstellung der Düsenvorrichtung in der Größenordnung von 2 mm.

Aus dem so erhaltenen Filtergranulat kann ein Absorptionsfilter oder ein Filtervlies hergestellt werden.

Zur Herstellung eines Absorptionsfilters wird zunächst aus einem geeigneten Siebgewebe mit einer kleineren Maschenweite als die mittlere Teilchengröße des Granulats (beispielsweise Maschenweite 1 mm) ein Zylinder hergestellt. Es kann ein Metall oder Kunststoffsiebgewebe verwendet werden. Das Filtergranulat wird in den Zylinder eingefüllt, fakultativ können einzelne Schichten durch Siebgewebe räumlich voneinander getrennt werden. Der befüllte Zylinder wird an seinen Stirnseiten mit Siebgewebe verschlossen und kann in das Klima- und Lüftungssystem des Flugzeugs als Absorptionsfilter integriert werden.

Zur Herstellung eines Vliesstoffes kann entweder während der Herstellung des Vlieses ein direktes Einstreuen des Granulats stattfinden. Alternativ kann bei einem fertigen Vliesstoff ein Einstreuen der Partikel zwischen zwei Vlieslagen stattfinden, die Vlieslagen können miteinander verklebt oder auf andere Weise relativ zueinander fixiert werden.

Die Figur zeigt schematisch das Klimasystem eines Verkehrsflugzeugs. Eine Kabine 4 und ein Cockpit 5 eines Flugzeugs werden von Versorgungsrohren 6 mit Luft gespeist. Diese Luft ist ein Gemisch aus temperierter Frischluft und gefilterter, umgewälzter Kabinenluft.

Die Frischluft wird durch Abzweigen so genannter Zapfluft aus dem Verdichter eines oder mehrerer Triebwerke 7 bereitgestellt. Der Hauptteil der aufgrund der Verdichtung erwärmten Zapfluft (Temperatur typischerweise 215-260 °C) wird einer Kühleinheit 8 zugeführt und auf die gewünschte Temperatur gekühlt. Der gekühlte Luftstrom wird einer Mischeinheit 9 zugeführt.

Verbrauchte Kabinenluft wird mittels einer Leitung 10 aus der Kabine abgesaugt und in einer Vorrichtung 11 zum Umwälzen und Filtern der Kabinenluft gereinigt. Diese Vorrichtung 11 arbeitet nach dem Stand der Technik. In der Mischeinheit 9 wird gereinigte, umgewälzte Kabinenluft und gekühlte Frischluft in einem vorgegebenen Verhältnis gemischt und über die Versorgungsrohre 6 dem Cockpit und der Kabine zugeführt. Zur Regelung der Temperatur in der Kabine kann über die Leitung 12 ein Teil der heißen, noch nicht gekühlten Zapfluft abgezweigt und mit dem von der Mischeinheit 9 zu Cockpit 5 und Kabine 4 geführten Luftstrom vermischt werden.

Die erfindungsgemäßen Filter können in einem solchen Klimasystem an verschiedenen Stellen verbaut werden, die in der Figur mit den Bezugsziffern 1, 2 und 3 gekennzeichnet sind.

Bei dem Einbauort 1 wird die noch heiße Zapfluft unmittelbar nach ihrer Entnahme aus dem Triebwerk 7 gefiltert. Dieser Einbauort hat den Vorteil, dass etwaige in der Zapfluft vorhandene Ölrückstände unmittelbar nach dem Austritt aus dem Triebwerk gefiltert werden und nicht in das Klimasystem gelangen können. Nachteilig an diesem Standort sind insbesondere die erschwerten Betriebsbedingungen durch hohe Temperatur, hohe Strömungsgeschwindigkeit und hohen Druck, die den effizienten Betrieb eines erfindungsgemäßen Filters erschweren.

Bei dem möglichen Einbauort 2 wird einerseits die bereits gekühlte Zapfluft und andererseits der für die Zwecke der Temperaturregelung abgezweigte heiße Teil der Zapfluft mittels jeweils wenigstens eines erfindungsgemäßen Filters gereinigt. Problematisch ist hier insbesondere die Tatsache, dass zwei Luftströme mit insbesondere sehr unterschiedlichen Temperaturen gefiltert werden müssen.

Bevorzugt ist es, erfindungsgemäße Filter am Einbauort 3 vorzusehen und die bereits temperierte Luft unmittelbar vor ihrer Zufuhr zu Cockpit 5 bzw. Kabine 4 zu filtern.

Dieser Einbauort 3 hat verschiedene Vorteile. Die Filter werden an diesem Einbauort von verhältnismäßig kühler Luft mit wenig variierender Temperatur durchströmt. Die Temperatur des Luftstroms am Einbauort 3liegt in jedem Fall unter 100 °C und erlaubt daher eine verhältnismäßig einfache weil nicht notwendigerweise temperaturfeste Konstruktion des Filters. Der Querschnitt der Versorgungsrohre 6 ist in der Regel groß (typische Durchmesser beispielsweise 150-164 mm), dies erlaubt einen entsprechend großen und damit wirkungsvollen Querschnitt des Filters, der zudem von wenig komprimierter Luft mit geringer Strömungsgeschwindigkeit durchströmt wird. Der Einbauort 3 ist zudem für Wartungszwecke gut zugänglich, da er sich innerhalb der Druckkabine befindet, beispielsweise ist ein Zugang über entsprechende Öffnungen im vorderen Frachtraum eines Flugzeugs möglich. Abhängig vom Flugzeugtyp kann die Zahl der erforderlichen Einbauorte 3 variieren. Bei einem kommerziellen Verkehrsflugzeug der A320-Familie werden beispielsweise fünf Filter benötigt, für eine Boeing 737 drei Filter.

## Patentansprüche

1. Filtergranulat zum Binden von Bestandteilen eines Gasstroms, mit Filterpartikeln, die folgende Komponenten aufweisen:
a) eine Komponente zur Physisorption von Bestandteilen, ausgewählt aus der Gruppe bestehend aus Aktivkohle, Bentonit, Kieselerden und Zeolithen,
b) eine Komponente zur Chemisorption von Bestandteilen, ausgewählt aus der Gruppe bestehend aus Peptiden oder Proteinen,
c) eine Komponente zur Lösung von Ölbestandteilen, die ionische Flüssigkeiten enthält, wobei die ionischen Flüssigkeiten vorzugsweise Kationen ausgewählt aus der Gruppe bestehend aus alkylierten Imidazolium-, Pyridinium-, Pyrrolidinium-, Guanidinium-, Uronium-, Thiouronium-, Piperidinium-, Morpholinium-, Ammonium- und Phosphoniumionen und Anionen ausgewählt aus der Gruppe bestehend aus Tetrafluoroboraten, Trifluoracetaten, Triflaten, Hexafluorophosphaten, Phosphinaten, Tosylaten, Imiden, Amiden, Sulfaten und Halogeniden enthalten.

2. Filtergranulat nach Anspruch 1, **dadurch gekennzeichnet, dass** die Komponente zur Chemisorption keratinhaltige Fasern enthält.

3. Filtergranulat nach einem der Ansprüche 1 oder 2, **dadurch gekennzeichnet, dass** es eine Matrix aufweist, wobei Bestandteile der Matrix vorzugsweise Komponenten zur Physisorption und/oder Komponenten zur Chemisorption umfassen.

4. Filtergranulat nach Anspruch 3, **dadurch gekennzeichnet, dass** die Matrix Bindemittel enthält, wobei die Bindemittel vorzugsweise ausgewählt sind aus der Gruppe bestehend aus Mannuron-, Guluron-, Alginat- und Pektinsalzen.

5. Filtergranulat nach einem der Ansprüche 1 bis 4, **dadurch gekennzeichnet, dass** die Matrix ionische Flüssigkeiten einschließt.

6. Filtergranulat nach einem der Ansprüche 1 bis 5, **dadurch gekennzeichnet, dass** es einen mittleren Partikeldurchmesser von 100 µm bis 5 mm aufweist.

7. Filtervlies, **dadurch gekennzeichnet, dass** er Filtergranulat nach einem der Ansprüche 1 bis 6 aufweist.

8. Verwendung eines Filtergranulats nach einem der Ansprüche 1 bis 6 und/oder eines Filtervlieses nach Anspruch 7 zur Filterung der Atemluft in Verkehrsmitteln, insbesondere Flugzeugen.

9. Verwendung eines Filtergranulats nach einem der Ansprüche 1 bis 6 und/oder eines Filtervlieses nach Anspruch 7 zur Filterung der Zapfluft aus dem Verdichter eines Flugzeugtriebwerks.

10. Filter zur Filterung der Atemluft in Verkehrsmitteln, insbesondere Flugzeugen, **dadurch gekennzeichnet, dass** er ein Filtergranulat nach einem der Ansprüche 1 bis 6 und/oder ein Filtervlies nach Anspruch 7 aufweist.

11. Filter nach Anspruch 10, **dadurch gekennzeichnet, dass** Filtergranulat und Filtervlies in einer sandwichartigen Anordnung vorliegen.

12. Flugzeug, **dadurch gekennzeichnet, dass** es wenigstens einen Filter nach Anspruch 10 oder 11 zur Filterung der Atemluft aufweist.

13. Flugzeug nach Anspruch 12, **dadurch gekennzeichnet, dass** wenigstens ein Filter an einem oder mehreren der folgenden Einbauorte angeordnet ist:
- zwischen Zapfluftventil und Kühleinheit,
- zwischen Kühl- und Mischeinheit,
- zwischen Mischeinheit und Austritt der Versorgungsrohre in Kabine und/oder Cockpit.

14. Flugzeug nach Anspruch 13, **dadurch gekennzeichnet, dass** wenigstens ein Filter innerhalb der Druckkabine vor dem Austritt der Versorgungsrohre in Kabine und/oder Cockpit angeordnet ist.

## Claims

1. Granular filter material for binding constituents of a gas stream, comprising filter particles which comprise the following components:
a) a component for the physisorption of constituents, selected from the group consisting of activate carbon, bentonite, diatomaceous earths and zeolites,
b) a component for the chemisorption of constituents, selected from the group consisting of peptides or proteins,
c) a component for the dissolution of oil constituents, which contains ionic liquids, where the ionic liquids preferably contain cations selected from the group consisting of alkylated imidazolium, pyridinium, pyrrolidinium, guanidinium, uronium, thiouronium, piperidinium, morpholinium, ammonium and phosphonium ions and anions selected from the group consisting of tetrafluoroborates, trifluoroacetates, triflates, hexafluorophosphates, phosphinates, tosylates, imides, amides, sulphates and halides.

2. Granular filter material according to Claim 1, **characterized in that** the component for chemisorption contains keratin-containing fibres.

3. Granular filter material according to either Claim 1 or 2, **characterized in that** it comprises a matrix, where constituents of the matrix preferably comprise components for physisorption and/or components for chemisorption.

4. Granular filter material according to Claim 3, **characterized in that** the matrix contains binders, where the binders are preferably selected from the group consisting of mannuronate, guluronate, alginate and pectin salts.

5. Granular filter material according to any of Claims 1 to 4, **characterized in that** the matrix encloses ionic liquids.

6. Granular filter material according to any of Claim 1 to 5, **characterized in that** it has an average particle diameter of from 100 µm to 5 mm.

7. Filter nonwoven, **characterized in that** it comprises granular filter material according to any of Claims 1 to 6.

8. Use of a granular filter material according to any of Claims 1 to 6 and/or a filter nonwoven according to Claim 7 for filtering the breathing air in transport vehicles, in particular aircraft.

9. Use of a granular filter material according to any of Claims 1 to 6 and/or a filter nonwoven according to Claim 7 for filtering the bleed air from the compressor of an aircraft engine.

10. Filter for filtering the breathing air in transport vehicles, in particular aircraft, **characterized in that** it comprises a granular filter material according to any of Claims 1 to 6 and/or a filter nonwoven according to Claim 7.

11. Filter according to Claim 10, **characterized in that** granular filter material and filter nonwoven are present in a sandwich-like arrangement.

12. Aircraft, **characterized in that** it has at least one filter according to Claim 10 or 11 for filtering the breathing air.

13. Aircraft according to Claim 12, **characterized in that** at least one filter is arranged at one or more of the following installation positions:
- between bleed air valve and cooling unit,
- between cooling unit and mixing unit,
- between mixing unit and outlet of the supply pipes into cabin and/or cockpit.

14. Aircraft according to Claim 13, **characterized in that** at least one filter is arranged within the pressurized cabin upstream of the outlet of the supply pipes into cabin and/or cockpit.

## Revendications

1. Granulé de filtration destiné à lier des constituants d'un flux de gaz, ledit granulé comprenant des particules de filtration qui comportent les composants suivants :
a) un composant destiné à la physisorption de constituants et choisi dans le groupe comprenant le charbon actif, la bentonite, la silice et des zéolites,
b) un composant destiné à la chimisorption de constituants et choisi dans le groupe comprenant les peptides et les protéines,
c) un composant destiné à la dissolution de constituants huileux, lequel composant contient des liquides ioniques, les liquides ioniques étant de préférence des cations choisis dans le groupe comprenant les ions imidazolium, pyridinium, pyrrolidinium, guanidinium, uronium, thiouronium, pipéridinium, morpholinium, ammonium et phosphonium alkylés et des anions choisis dans le groupe comprenant les tétrafluoroborates, les trifluoroacétates, les triflates, les hexafluorophosphates, les phosphinates, les tosylates, les imides, les amides, les sulfates et les halogénures.

2. Granulé de filtration selon la revendication 1, **caractérisé en ce que** le composant destiné à la chimisorption contient des fibres contenant de la kératine.

3. Granulé de filtration selon l'une des revendications 1 et 2, **caractérisé en ce qu'**il comporte une matrice, les constituants de la matrice comprenant de préférence des composants destinés à la physisorption et/ou des composants destinés à la chimisorption.

4. Granulé de filtration selon la revendication 3, **caractérisé en ce que** la matrice contient des agents liants, les agents liants étant de préférence choisis dans le groupe comprenant les sels de mannuron, de guluron, d'alginate et de pectine.

5. Granulé de filtration selon l'une des revendications 1 à 4, **caractérisé en ce que** la matrice renferme des liquides ioniques.

6. Granulé de filtration selon l'une des revendications 1 à 5, **caractérisé en ce qu'**il a un diamètre moyen de particules de 100 µm à 5 mm.

7. Non-tissé de filtration, **caractérisé en ce qu'**il comporte des granulés de filtration selon l'une des revendications 1 à 6.

8. Utilisation d'un granulé de filtration selon l'une des revendications 1 à 6 et/ou un non-tissé de filtration selon la revendication 7 destiné à filtrer l'air de respiration dans des moyens de transport, notamment des aéronefs.

9. Utilisation d'un granulé de filtration selon l'une des revendications 1 à 6 et/ou d'un non-tissé de filtration selon la revendication 7 pour filtrer l'air de prélèvement provenant du compresseur d'un moteur d'avion.

10. Filtre destiné à la filtration de l'air de respiration dans des moyens de transport, en particulier des aéronefs, **caractérisé en ce qu'**il comporte un granulé de filtration selon l'une des revendications 1 à 6 et/ou un non-tissé de filtration selon la revendication 7.

11. Filtre selon la revendication 10, **caractérisé en ce que** le granulat de filtration et le non-tissé de filtration sont présents selon une disposition en sandwich.

12. Aéronef, **caractérisé en ce qu'**il comporte au moins un filtre selon la revendication 10 ou 11 destiné à filtrer l'air de respiration.

13. Aéronef selon la revendication 12, **caractérisé en ce qu'**au moins un filtre est disposé à un ou plusieurs des sites d'installation suivants :
- entre la vanne d'air de prélèvement et l'unité de refroidissement,
- entre l'unité de refroidissement et l'unité de mélange,
- entre l'unité de mélange et la sortie des conduites d'alimentation dans la cabine et/ou le cockpit.

14. Aéronef selon la revendication 13, **caractérisé en ce qu'**au moins un filtre est disposé à l'intérieur de la cabine pressurisée devant la sortie des conduites d'alimentation dans la cabine et/ou le cockpit.
